# EUROPÄISCHE PATENTSCHRIFT

(11) **EP 1 723 440 B1**
(45) Veröffentlichungstag und Bekanntmachung des Hinweises auf die Patenterteilung: **19.12.2012**
(21) Anmeldenummer: 05731757.0
(22) Anmeldetag: 11.03.2005
(51) Int. Cl.: G06F 3/023

(54) **DYNAMISCHE VERWALTUNG EINES TASTATURSPEICHERS**
DYNAMIC MANAGEMENT OF A KEYBOARD MEMORY
GESTION DYNAMIQUE DE MEMOIRE DE CLAVIER

(30) Priorität: 11.03.2004 DE 102004012338
(43) Veröffentlichungstag der Anmeldung: 22.11.2006
(73) Patentinhaber: Preh KeyTec GmbH, 97616 Bad Neustadt a.d. Saale (DE)
(72) Erfinder: LIEB, Jürgen, 97469 Gochsheim (DE); GROSSMANN, Bernd, 97640 Oberstreu (DE); LIMPERT, Rudolf, 97616 Salz (DE)
(74) Vertreter: Thul, Hermann
(86) Internationale Anmeldenummer: PCT/EP2005/002645
(87) Internationale Veröffentlichungsnummer: WO 2005/088334

(56) Entgegenhaltungen:
- EP-A2- 0 084 454
- WO-A-90/02993
- WO-A1-01/35531
- WO-A1-03/026135
- US-A- 4 200 913
- US-A- 4 853 888
- US-A- 6 018 335
- US-A1- 2003 201 981
- US-A1- 2003 214 664

## Beschreibung

Die Erfindung betrifft ein Verfahren zur Eingabe und/oder Änderung der den Tasten und/oder Zubehöreinrichtungen einer frei programmierbaren Tastatur zugeordneten, In mindestens einem programmierbaren Speicher abgelegten Daten.

Bekannte frei programmierbare Tastaturen, insbesondere Kassentastaturen für Points of Sale (POS), umfassen außer einem Tastaturblock einen Mikroprozessor, der die betätigten Tasten oder Tastenkombinationen ermittelt und diesen Zeichen bzw. Funktionen zuordnet, wobei der Mikroprozessor mit mindestens einem programmierbaren Speicher verbunden ist, der die entsprechenden (die Zeichen oder Funktionen charakterisierenden) Daten enthält. Bei den bekannten Tastaturen wird pro Tastencode, und damit pro Taste oder Tastenkombination, jeweils ein bestimmter, fest vorgegebener Speicherbereich des programmierbaren Speichers reserviert.

Soll die Zuordnung zwischen der gedrückten Taste oder Tastenkombination und der entsprechenden Bedeutung (d.h. dem Speicherinhalt) geändert werden, so kann entweder der Speicher z.B. mittels eines externen PCs neu programmiert werden oder der gesamte Speicher kann gegen einen neuen, entsprechend vorprogrammierten Speicher ausgetauscht werden.

Die WO 031028135 A1 beschäftigt sich mit einer Tastatur, deren Tasten mit unterschiedlichen Funktionen belegt werden kann.

Die US 6,018,335 A betrifft ein Gerät, das zwischen einer Tastatur und einem Computer geschaltet wird. Das Gerät funktioniert ähnlich einem Key-Mapper (wandeln von Tastendrücken in Makros, die vom Anwender definiert werden). Die hierbei vom Bediener erzeugten Makros sind repräsentativ für einen Befehl, einen Dateinamen, etc. oder eine andere Operation oder Tastenkombination, die häufig durch den Benutzer verwendet werden. Die Vorrichtung oder das Gerät besteht aus einem Kontrollar und einem Speichermedium.

Dieses auch als Hardware Keylogger" bezeichnete Gerät verwendet eine statische Speicherverwaltung, indem die Signalparameter nur im RAM und Tastencodes unter festen Speicheradressen abgelegt werden, sodass die Anzahl der Speicheradressen proportional zur Anzahl der Tasten Ist.

Als nachteilig hat es sich allerdings in der Praxis erwiesen, dass der maximale Speicherplatz pro Tastencode fest vorgegeben ist. Wird dieser Speicherplatz für die Daten nur teilweise benötigt, so kann der verbleibende freie Speicherplatz nicht für andere Testencodes (oder Programmierebenen) verwendet werden. Außerdem muss Speicherplatz für verfügbare Programmiebenen vorgehalten werden, auch wenn In der entsprechenden Ebene keine Programmierung erfolgt. Schließlich ist die Anzahl der möglichen Programmierebenen festgelegt.

Der Erfindung liegt die Aufgabe zugrunde, ein Verfahren anzugeben, mit der trotz eines beschränkt zur Verfügung stehenden Speicherplatzes des frei programmierbaren Speichers die jeweilige Tastatur optimal an die Vorstellungen der Benutzer angepasst werden kann, und zwar such dann, wenn sich bei einer neuen Programmierung der Tastatur ergibt, dass für eine Taste oder Tastenkombination mehr Speicherplatz benötigt wird, als ursprünglich angenommen wurde.

Diese Aufgabe wird erfindungsgemäß durch die Merkmale des Anspruchs 1. Weitere, besonders vorteilhafte Ausgestaltungen der Erfindung offenbaren die Unteransprüche.

Die Erfindung beruht im Wesentlichen auf dem Gedanken, den programmierbaren Speicher der Tastatur nicht wie bisher statisch, sondern dynamisch zu verwalten, d.h. pro Taste wird nur so viel Speicherplatz verwendet, wie für die entsprechende zugeordnete Information tatsächlich erforderlich ist. Der nicht benötigte Speicherplatz steht hingegen den anderen **Tas**ten und/oder frei programmierbaren Zubehöreinrichtungen zur Verfügung. Dies geschieht, Indem beim Abruf von den Tasten und/oder Zubehöreinrichtungen einer frei programmierbaren Tastatur zugeordneten, in mindestens einem programmierbaren Speicher abgelegten Daten mittels in einem ersten Bereich des programmierbaren Speichers hinterlegter Speicheradressen die die Daten enthaltenden Speicherstellen in einem zweiten Bereich des programmierbaren Speichers adressiert werden.

Der Vorteil dieser dynamischen Speicherverwaltung besteht also darin, dass der zur Verfügung stehende Speicherplatz des programmierbaren Speichers optimal ausgenutzt wird.

Die US 4,853,888 A beschreibt eine Tastatur mit integriertem Display, auf dem Benutzerhinweise angezeigt werden können, und eine Möglichkeit, Symbole auf den Tasten darzustellen. In einer Datenbank, die im Prozessorspeicher abgelegt ist, werden die einzelnen Seiten zum Steuern des Gerätes abgelegt. Die Seiten verzweigen jeweils auf die vorherige als auch auf die nächste Seite. Eine spezielle Seite beinhaltet die Informationen, die auf dem Display angezeigt werden. Eine andere Seite Informationen zum Steuern der Symbole auf den Tasten. Durch Tastendrücke werden Informationen an das Display gesendet.

Die US 2003/201981 A1 offenbart ein Verfahren, um Informationen, die von einer Tastatur gesendet werden, zu manipulieren, indem die Informationen der Tastatur über eine key mapping" Behandlung verändert werden.

Die WO 01/35531 A1 betrifft ein System mit einer Tastatur, die über einen Client Computer Informationen mit einem Server austauscht. Daten werden vom Message Server übertragen um auf dem Display der Tasten angezeigt werden zu können. Die Message Daten (functions and displayed information) werden nicht In der Tastatur gespeichert.

Die EP 0 084 454 A2 betrifft ein Terminal zur Eingabe eines Test-Programms in einer Programmiersprache. Ein Tastendruck auf einer externen Tastatur (100) wird über eine Microcomputereinheit (200) empfangen, eine entsprechende Programmierung aus einem festen Speicher ROM ausgelesen und ausgegeben.

Die US 4,200,913 A beschreibt eine Bedieneinheit mit Anzeige (Terminal) - konkret für eine Kathodenröhre. Die Umsetzung des Tastencodes erfolgt außerhalb der Tatstatur in einer Elektronik über 4 Umsetzungstabellen. Die Verwaltung erfolgt nur in einer Ebene. Für jeden Tastencode gibt es eine fest zugeordnete Adresse in der "Key Attribute Codes Table", mit der eine statische Speicherung vorgenommen werden kann.

Die US 2003/214664 A1 bezieht sich auf einen programmierbaren Drucker sowie der Programmierung der Tasten. Die Programmierung erfolgt durch Betätigung von Tasten oder Tastenfolgen. Auch hier erfolgt die Tastenprogrammierung durch Speicherung in festen Speicherbereichen.

Aus der WO 90/02993 A ist ein Gerät bekannt, das zwischen einem Computer und einer Tastatur gesohaltet wird und zur Speicherung und Aufzeichnung von digitalen Signalen dient. Ein weiterer Vorteil der Erfindung besteht darin, daß die Anzahl der Programmierebenen pro Taste 128 beträgt, wobei auch in diesem Fall der Speicher dynamisch verwaltet werden kann.

Dazu erfolgt die Eingabe und/oder Änderung der den Tasten und/oder Zubehöreinrichtungen einer frei programmierbaren Tastatur zugeordneten, in mindestens einem programmierbaren Speicher ablegbaren Daten dadurch, dass die Belegung des programmierbaren Speichers in einem externen Gerät erstellt oder geändert und über eine Schnittstelle an die Tastatur übertragen wird. Dabei wird pro Taste und/oder Zubehöreinrichtung nur so viel Speicherplatz verwendet, wie dieses für die abzuspeichernden Daten zwingend erforderlich ist, indem die einzelnen mit den Daten belegten Speicherbereiche unmittelbar aneinander anschließen. Als externes Gerät wird vorteilhafterweise ein PC oder ein spezielles Programmiergerät verwendet.

Eine programmierbare Tastatur weist erfindungsgemäß einen Tastaturblock, einen Mikroprozessor, mindestens einen programmierbaren Speicher mit den Tasten und/oder Zubehöreinrichtungen der frei programmierbaren Tastatur zugeordneten Daten, einen Programmspeicher sowie eine Schnittstelle auf, wobei die Belegung des Speichers über die Schnittstelle auf die Tastatur übertragbar ist. In vorteilhafter Weise ist der programmierbare Speicher und/oder der Programmspeicher in den Mikroprozessor integriert.

Weitere Einzelheiten und Vorteile der Erfindung ergeben sich aus den folgenden, anhand von Figuren erläuterten Ausführungsbeispielen. Es zeigen:
- Fig.1: das Blockschaltbild einer Tastatureinrichtung, mit der die erfindungsgemäßen Verfahren ausführbar sind,
- Fig.2: eine schematische Darstellung zur Erläuterung der an sich bekannten statischen Speicherverwaltung,
- Fig.3: einen vergrößerten Ausschnitt aus der in Fig.2 dargestellten Ansicht
- Fig.4: eine schematische Darstellung zur Erläuterung der dynamischen Speicher verwaltung und
- Fig.5: einen vergrößerten Ausschnitt aus der in Fig.4 dargestellten Ansicht.

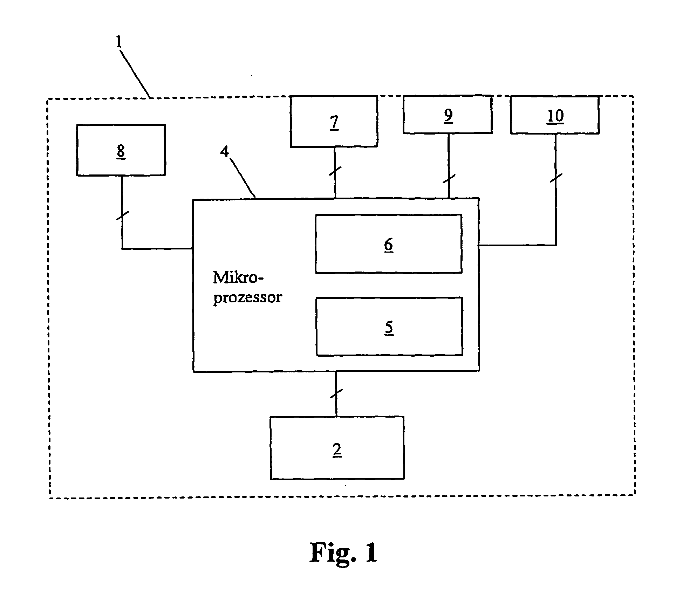

In Fig.1 ist mit 1 eine frei programmierbare Tastatureinrichtung (z.B. eine Kassentastatur) bezeichnet, die im Wesentlichen aus einem Tastaturblock 2, einem Mikroprozessor 4, einem Programmspeicher 5 und einem programmierbaren Datenspeicher 6 besteht.

Der Programmspeicher 5 enthält den Programmcode, der im Betrieb der Tastatur 1 vom Mikroprozessor ausgeführt wird. Im programmierbaren Speicher 6 sind die den Tasten und/oder Zubehöreinrichtungen zugeordneten Daten hinterlegt. Im vorliegenden Beispiel sind sowohl der Programmspeicher 5 als auch der programmierbare Speicher 6 in den Mikroprozessor 4 integriert.

Der Mikroprozessor 4 ist mit einer Tastaturschnittstelle 7 und einem Magnetkartenleser 8 verbunden. Die Tastaturschnittstelle ist je nach Anwendungsgebiet als PS/2-, USB- oder RS232-Schnittstelte ausgebildet. Außerdem ist der Mikroprozessor 4 zur Verbindung mit weiteren Zusatzgeräten über ein BUS-System mit mehreren Schnittstellen 9, 10 der Tastatur 1 verbunden.

Der Mikroprozessor 4 fragt regelmäßig den Status des Tastaturblockes 2 ab und stellt auf eine dem Fachmann bekannte Weise fest, welche Taste oder Tastenkombination gedrückt wurde. Anschließend erfolgt die Zuordnung eines Zeichens, einer Zeichenkette oder eines Befehls zu der gedrückten Taste oder Tastenkombination anhand der im programmierbaren Speicher 6 hinterlegten Daten.

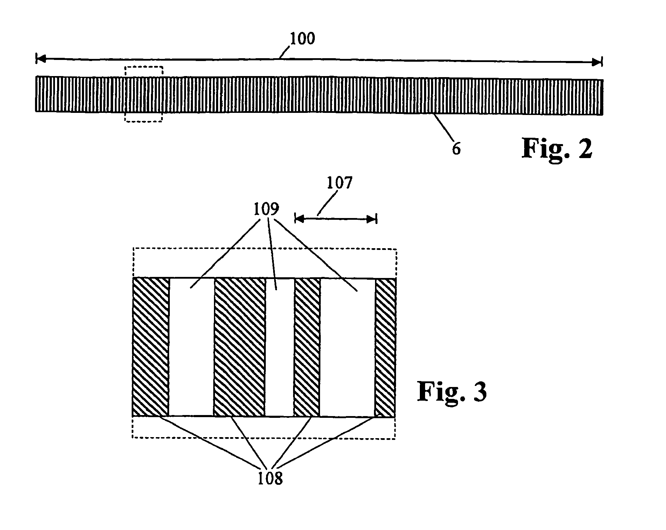

Die Figuren 2 und 3 zeigen die im Stand der Technik bekannte statische Speicherbelegung. Dabei ist der programmierbare Speicher 6 schematisch als Rechteck dargestellt, dessen Länge dem gesamten zur Verfügung stehenden Speicherbereich 100 entspricht. In diesem Fall setzt sich der gesamte Speicherbereich 100 aus einer Vielzahl von Speicherzellen 107 gleicher Breite zusammen, wobei jede Speicherzelle 107 einer Taste bzw. Tastenkombination oder einer Zubehöreinrichtung zugeordnet ist. Die Größe der jeweiligen Speicherzellen 107 wird durch die maximale Größe der in einer Zelle zu speichernde Information bestimmt, die von vornherein vorgegeben werden muss und nachträglich nicht geändert werden kann. In der Regel bedeutet dies, dass nur ein Teil der jeweiligen Speicherzelle 107 mit Informationen belegt ist (in Fig. 3 ist dieses durch die schraffierten Speicherbereiche 108 angedeutet). Der restliche Speicherbereich 109 der jeweiligen Speicherzelle 107 ist hingegen nicht mit Daten belegt und steht zur Speicherung von Informationen anderer Tasten nicht zur Verfügung. Die Adressierung der Speicherzellen geht von einer äquidistanten Belegung des Speichers 6 aus. Die anzusprechende Position im Speicher 6 wird auf dem Fachmann bekannte Weise aus der gedrückten Taste oder Tastenkombination berechnet.

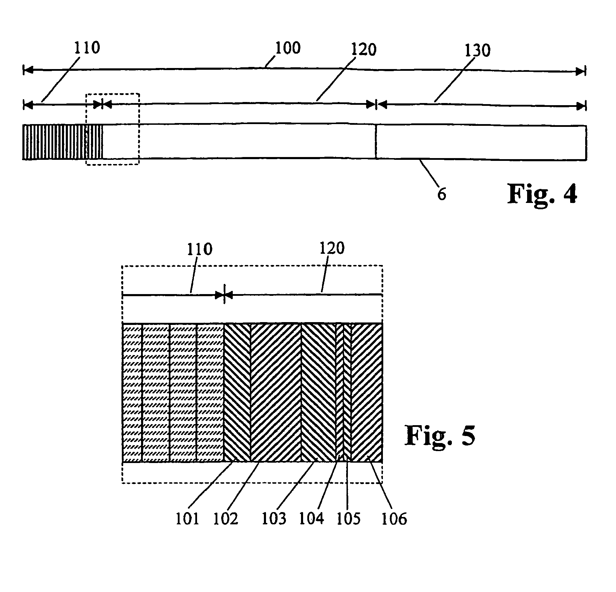

Die erfindungsgemäße dynamische Nutzung des Speichers 6 ist in den Figuren 4 und 5 illustriert. Dabei weist der Speicher 6 drei Bereiche auf: Bereich 110 enthält eine Speicherzuordnungstabelle, Bereich 120 die den Tasten zugeordneten Informationen und Bereich 130 ist leer. Wurde eine Taste oder Tastenkombination gedrückt, so ermittelt der Mikroprozessor 4 zunächst aus Speicherbereich 110, an welcher Stelle im Speicherbereich 120 die der Taste oder Tastenkombination zugeordnete Information gespeichert ist. Diese Stelle ist als Speicheradresse hinterlegt. Die Position, an der die Speicheradresse in Speicherbereich 110 hinterlegt ist, wird beispielsweise analog zum oben angegebenen Verfahren bei statischer Verwaltung des Speichers 6 berechnet, indem die Speicheradressen äquidistant hinterlegt sind. Dies ist möglich, da die Speicheradressen stets den gleichen Speicherplatzbedarf aufweisen. Die Länge der Daten, die im Speicherbereich 120 abgelegt sind, ist hingegen dynamisch und entspricht dem tatsächlichen Bedarf. So bestehen im Speicherbereich 120 einerseits keine Lücken, andererseits können die Daten (individuell unterschiedlich) beinahe beliebig viel Speicherplatz belegen. Dies wird durch die indirekte Adressierung über den Speicherbereich 110 erreicht. Die variable Größe der Daten im Speicherbereich 120 wird in Figur 5 durch die unterschiedlich großen Speicherzellen 101-106 angedeutet.

Sollen die Daten im programmierbaren Speicher 6 geändert oder ersetzt werden, so erfolgt in einem externen Gerät die Erzeugung eines Speicherabbildes, das anschließend über eine Schnittstelle wie die Tastaturschnittstelle 7 auf die Tastatur 1 übertragen und im Speicher 6 abgelegt wird. Das Speicherabbild wird bevorzugt mit einer hier nicht näher beschriebenen speziellen Software erzeugt, beispielsweise auf einem PC mit der PREH WinProgrammer-Software, wobei die den Tasten und/oder Zubehöreinrichtungen zuzuordnenden Daten eingegeben werden und daraus automatisch die Speicherzuordnungstabelle generiert wird.

In den vorstehend beschriebenen Ausführungsbeispielen wurde die erfindungsgemäße dynamische Speicherverwaltung lediglich im Zusammenhang mit der freien Programmierbarkeit der Tasten bzw. Tastenkombinationen des Tastaturblockes 2 beschrieben. Eine derartige dynamische Speicherverwaltung ist selbstverständlich aber auch im Zusammenhang mit den weiteren Zubehöreinrichtungen der Tastatur 1, wie dem Magnetkartenleser 8, einem Chipkartenleser oder einem Schlüsselschalter (nicht dargestellt), etc. möglich.

Für den Fachmann ist offensichtlich, dass die Verteilung der Speicherbereiche 110, 120 und 130 innerhalb des Speichers 100 beliebig anders erfolgen kann.

### Bezugszeichenliste

- 1: Tastatur
- 2: Tastaturblock
- 4: Mikroprozessor
- 5: Programmspeicher
- 6: programmierbarer Speicher, Datenspeicher
- 7: Tastaturschnittstelle
- 8: Magnetkartenleser, Zubehöreinrichtung
- 9, 10: Schnittstellen
- 100: Speicherbereich
- 101-106: Speicherbereiche, Speicherzellen
- 107: Speicherbereich, Speicherzelle
- 108,109: Speicherbereiche
- 110,120,130: Speicherbereiche

## Patentansprüche

1. Verfahren zur Eingabe und/oder Änderung der Tasten und/oder Zubehöreinrichtungen (8) einer frei programmierbaren Tastatur (1), beispielsweise einer Kassentastatur, zugeordneten, in mindestens einem programmierbaren Speicher (6) ablegbaren Daten, mit einem Tastaturblock (2), einem Mikroprozessor (4) und einem Programmspeicher (5), wobei
• mittels in einem ersten Bereich (110) des programmierbaren Speichers (6) hinterlegten Speicheradressen die die Daten enthaltenden Speicherstellen in einem zweiten Bereich (120) des programmierbaren Speichers (6) adressiert werden,
• zur Änderung oder zum Ersetzen der Daten im programmierbaren Speicher (8) in einem externen Gerät die Erzeugung eines Spelcherabbildes erfolgt, das über eine Schnittstelle (7) auf die Tastatur (1) übertragen und im Speicher (6) abgelegt wird und
• das Speicherabbild mit einer Software erzeugt wird, wobei die den Tasten und /oder Zubehöreinrichtungen (8) zugeordneten Daten eingegeben werden und daraus automatisch die Speicherzuordnungstabelle generiert wird, sodass
• eine dynamische Verwaltung des programmierbaren Speichers erfolgt,
• die Anzahl der Programmierebenen pro Taste 128 beträgt, wobei auch in diesem Fall der Speicher (6) dynamisch verwaltet werden kann.

2. Verfahren nach Anspruch 1, **dadurch gekennzeichnet, dass** die zugeordneten Daten in dem programmierbaren Speicher (6) derart abgelegt werden, dass pro Taste und/oder Zubehöreinrichtung (8) nur so viel Speicherplatz verwendet wird, wie dieses für die abzuspeichernden Daten zwingend erforderlich ist, und dass sich die einzelnen mit den Daten belegten Speicherbereiche (101-106) unmittelbar aneinander anschließen.

3. Verfahren nach Anspruch 1 oder 2, **dadurch gekennzeichnet, dass** der programmierbare Speicher (6) und/oder der Programmspeicher (5) In einem Mikroprozessor (4) Integriert ist /sind.

4. Verfahren nach einem der Ansprüche 1 bis 3, **dadurch gekennzeichnet, dass** als **ex**ternes Gerät ein PC oder ein Programmiergerät verwendet wird.

5. Verfahren nach einem der Ansprüche 1 bis 4, **dadurch gekennzeichnet, dass** der Mikroprozessor (4) über ein BUS-System mit mehreren Schnittstellen (9, 10) der Tastatur (1) zur Verbindung mit weiteren Zusatzgeräten verbunden ist.

6. Verfahren nach einem der Ansprüche 1 bis 5, **dadurch gekennzeichnet, dass** die Zubehöreinrichtung (8) ein Magnetkartenleser, ein Chipkartenleser oder ein Schlüsselschalter sind.

## Claims

1. Method for inputting and/or changing the data that are associated with keys and/or accessory devices (8) of a user-programmable keyboard (1), for example a checkout keyboard, and that can be stored in at least one programmable memory (6), with a keyboard block (2), a microprocessor (4) and a program memory (5), wherein
• memory addresses stored in a first area (110) of the programmable memory (6) are used to address the memory locations containing the data in a second area (120) of the programmable memory (6),
• the data in the programmable memory (6) are changed or replaced by virtue of an external appliance producing a memory map which is transmitted to the keyboard (1) via an interface (7) and is stored in the memory (6), and
• the memory map is produced using a piece of software, wherein the data that are associated with the keys and/or accessory devices (8) are input and the memory allocation table is generated automatically therefrom, with the result that
• dynamic management of the programmable memory takes place,
• the number of programming levels per key is 128, with the memory (6) being able to be managed dynamically in this case too.

2. Method according to Claim 1, **characterized in that** the associated data are stored in the programmable memory (6) such that only as much memory space is used per key and/or accessory device (8) as is absolutely necessary for the data that are to be stored, and **in that** the individual memory areas (101-106) occupied by the data are in direct succession to one another.

3. Method according to Claim 1 or 2, **characterized in that** the programmable memory (6) and/or the program memory (5) is/are integrated in a microprocessor (4).

4. Method according to one of Claims 1 to 3, **characterized in that** the external appliance used is a PC or a programming appliance.

5. Method according to one of Claims 1 to 4, **characterized in that** the microprocessor (4) is connected by means of BUS system to a plurality of interfaces (9, 10) of the keyboard (1) for the purpose of connection to further supplementary appliances.

6. Method according to one of Claims 1 to 5, **characterized in that** the accessory device (8) is a magnetic card reader, a chip card reader or a key switch.

## Revendications

1. Procédé pour la saisie et /ou la modification des touches et /ou de dispositifs accessoires (8) de données pouvant être déposées dans au moins une mémoire programmable (6) attribuée à un clavier librement programmable (1), par exemple un clavier de caisse, avec un bloc de clavier (2), un microprocesseur (4) et une mémoire de programme (5), dans lequel
- on adresse les emplacements de mémoire contenant les données dans une deuxième plage (120) de la mémoire programmable (6) par l'intermédiaire d'adresses de mémoire déposées dans une première plage (110) de la mémoire programmable (6),
- pour la modification ou pour le remplacement des données dans la mémoire programmable (6), on opère dans un appareil externe la production d'une image de la mémoire qui est transmise au clavier (1) par l'intermédiaire d'une interface (7) et qui est déposée dans la mémoire (6) et
- on produit l'image de la mémoire au moyen d'un logiciel permettant de saisir des données affectées aux touches et /ou aux dispositifs accessoires (8) et à partir de là on génère automatiquement la table affectée à la mémoire de manière à
- opérer une gestion dynamique de la mémoire programmable,
- le nombre de plans programmables par touche est de 128, auquel cas la mémoire (6) peut aussi être gérée dynamiquement.

2. Procédé selon la revendication 1, **caractérisé en ce que** les données affectées sont déposées dans la mémoire programmable (6) de telle sorte que par touche et /ou par dispositif accessoire (8), on n'utilise que la place de mémoire strictement nécessaire pour les données à mémoriser, et **en ce que** les plages de mémoires individuelles (101 - 106) pourvues de données sont directement jointes mutuellement.

3. Procédé selon la revendication 1 ou 2, **caractérisé en ce que** la mémoire programmable (6) et /ou la mémoire de programme (5) sont intégrées dans un microprocesseur (4).

4. Procédé selon une des revendications 1 à 3, **caractérisé en ce qu'**on utilise un PC ou un appareil de programmation comme appareil externe.

5. Procédé selon une des revendications 1 à 4, **caractérisé en ce que** le microprocesseur (4) est relié par l'intermédiaire d'un système de BUS avec plusieurs interfaces (9, 10) du clavier (1) pour la liaison avec d'autres appareils complémentaires.

6. Procédé selon une des revendications 1 à 5, **caractérisé en ce que** le dispositif accessoire (8) est un lecteur de cartes magnétiques, un lecteur de cartes à puce ou un interrupteur à clé.
